# EUROPEAN PATENT SPECIFICATION

(11) **EP 0 384 757 B1**
(45) Date of publication and mention of the grant of the patent: **25.05.1994**
(21) Application number: 90301909.9
(22) Date of filing: 22.02.1990
(51) Int. Cl.: F03B 13/14, F03B 17/06

(54) **A fluid turbine**
Hydraulische Turbine
Turbine hydraulique

(30) Priority: 24.02.1989 GB 8904217
(43) Date of publication of application: 29.08.1990
(73) Proprietor: Haleem, Hamid A., Muscat (OM)
(72) Inventor: Haleem, Hamid A., Muscat (OM)
(74) Representative: Sherrard-Smith, Hugh

(56) References cited:
- WO-A-83/02804
- GB-A- 25 793
- GB-A- 135 650
- US-A- 1 741 949
- US-A- 4 333 311

## Description

This invention relates to a fluid turbine, and a method of operating a fluid turbine and in particular, although not exclusively, to a turbine driven by waves of the sea or ocean.

Waves in seas and oceans are known to possess a huge potential of power, hitherto not commercially utilized. A number of trials have been made to develop machines to make use of that power. Some of these machines depended on the use of floating bodies hinged together so that when they are tossed up and down by the waves, water in cylinders will be compressed to high pressures under the influence of pistons actuated by the movement of the hinged bodies. This pressurised water can be used to drive a coupled machine. Alternatively, floating bodies attached to one side of a flexible shaft through one-way free-wheel drives, can be made, when tossed up by the waves to rotate the above-mentioned shaft.

A completely different concept has also been tried, mainly by the Japanese. Waves are allowed to plunge into a fixed chamber, thus acting like a piston moving inside a cylinder. The upper part of the chamber is divided into two compartments by a wall having an aperture in which a turbine is fixed. With the help of a system of non-return valves, the air pushed into the first compartment by the incoming wave, or sucked into it by the receding wave, causes the turbine to rotate. However, the efficiency of the above-mentioned machines has proved to be very low, and this explains their very limited use.

U.S. Patent No. 1 741 949 discloses a fluid turbine comprising a rotary device including a plurality of vanes angularly spaced from each other around the axis of rotation of the device, the vanes being movably mounted on the device between two positions about an axis extending at an angle to the vertical with at least one of the vanes, when suspended from the device in the absence of fluid flow, being arranged to extend at an angle to the vertical, the axis of rotation being arranged, in use, such that the parts of the device spaced from the axis that move around the axis are arranged to pass over and beneath the axis.

The present invention is characterised in that the turbine is arranged to receive fluid alternately in an upwards and a downwards direction with a side of at least one vane being arranged to be engaged by fluid flowing downwardly to cause rotation in a first direction and a side of at least one vane being arranged to be engaged by fluid flowing upwardly to cause rotation in the first direction.

At least one side of one vane may be arranged to be engaged by fluid flowing downwardly to cause rotation in the first direction with the other side of said one vane being arranged to be engaged by fluid flowing upwardly to cause rotation in the first direction during a rotational cycle.

The vane may be part of a vane portion which includes a counterweight.

The vane may be movable relative to the device between two limit positions.

The vane may be pivotally movable between approximately 90°.

The device may include at least one second vane which, when suspended from the device in the absence of fluid flow, is arranged to extend at an angle to the vertical in the direction opposed to that of a first vane which is also arranged to extend at an angle to the vertical when suspended, with the first and second vanes being located on a substantially common radial extent of the device.

A wave operated arrangement may include a plurality of fluid turbines according to the present invention in which a plurality of rotary devices of the turbines are located along a common shaft, the arrangement being arranged to be located with the axis of the shaft extending at an angle to or transverse to the approaching waves and at an angle to or transverse to the perpendicular to the approaching waves.

According to another aspect of the present invention a method of operating a fluid turbine including a rotary device having a plurality of vanes angularly spaced from each other around the axis of rotation of the device, the vanes being movably mounted on the device between two positions about an axis extending transverse to the vertical with at least one of the vanes, when suspended from the device, being caused to extend at an angle to the vertical in the absence of fluid flow is characterised in that the turbine receives fluid alternately flowing upwardly and downwardly with downwards flow engaging a side of at least one vane to cause movement in a first direction and upwards flow engaging a side of at least one vane to cause rotation in the first direction.

The method may comprise downwards flow engaging at least one side of at least one vane and upwards flow engaging the other side of that vane during a rotational cycle to cause rotation in the first direction.

The method may comprise using a device which includes a second vane in addition to the first vane which second vane is also caused to extend at an angle to the vertical when suspended from the device in the absence of fluid flow, with the first and second vanes being located on a substantially common extent.

A method of operating a wave power arrangement when operating a fluid turbine according to the present invention, in which the arrangement includes a plurality of rotary devices located along a common shaft, the method comprises the wave power causing rotation of the drive shaft by the rotary devices with the axis of rotation of the drive shaft being located at an angle to or transversely to the approaching waves and at an angle to or transversely to the perpendicular to the approaching waves.

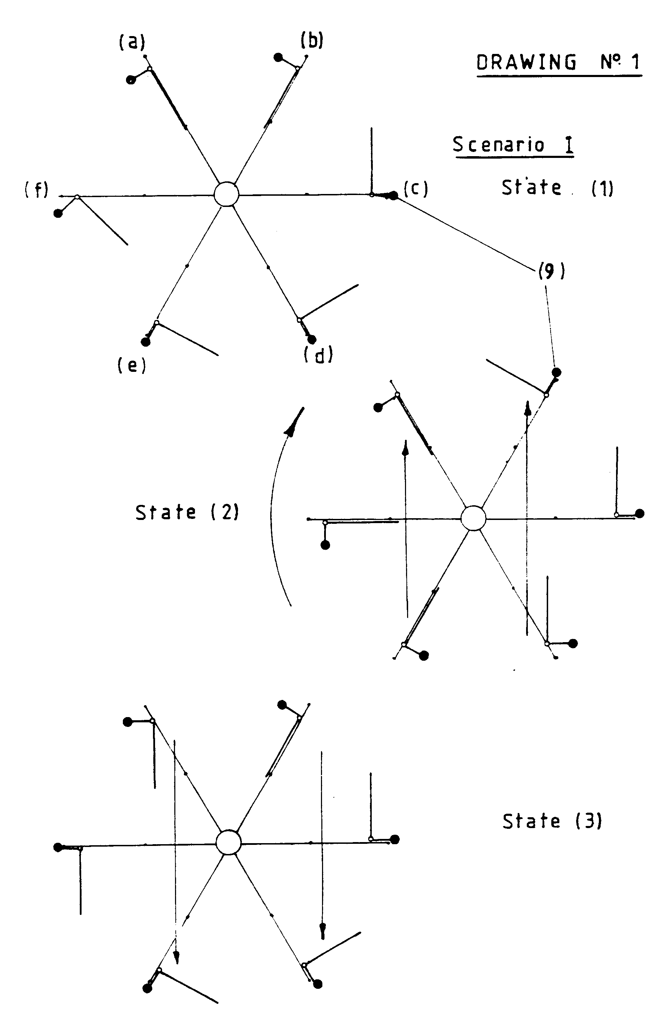

The present invention may be carried into practice in various ways but various embodiments will now be described, by way of example and with reference to the accompanying drawings in which:-
Figure 1 is a schematic representation of a first embodiment of wave turbine showing three different operating states;

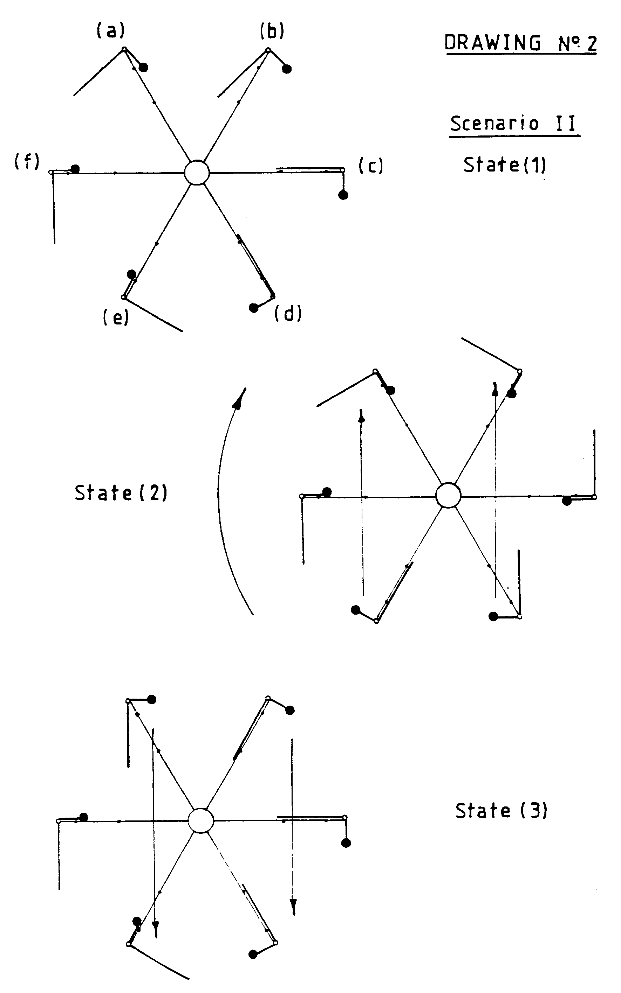

Figure 2 is a view similar to Figure 1 showing a second embodiment;

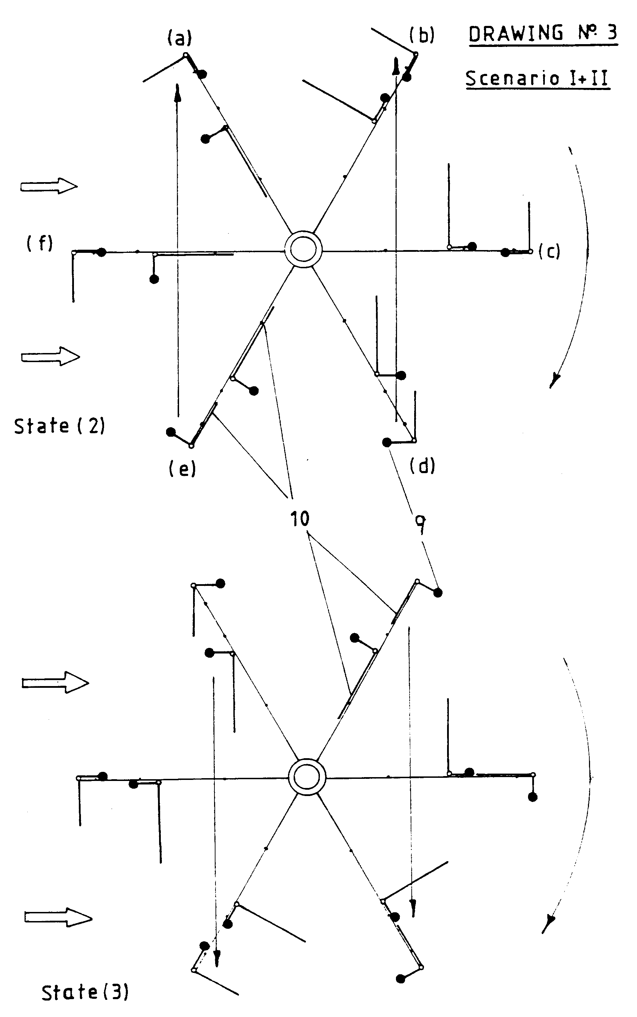

Figure 3 is a view of a third embodiment showing the position of various vanes in two states, and

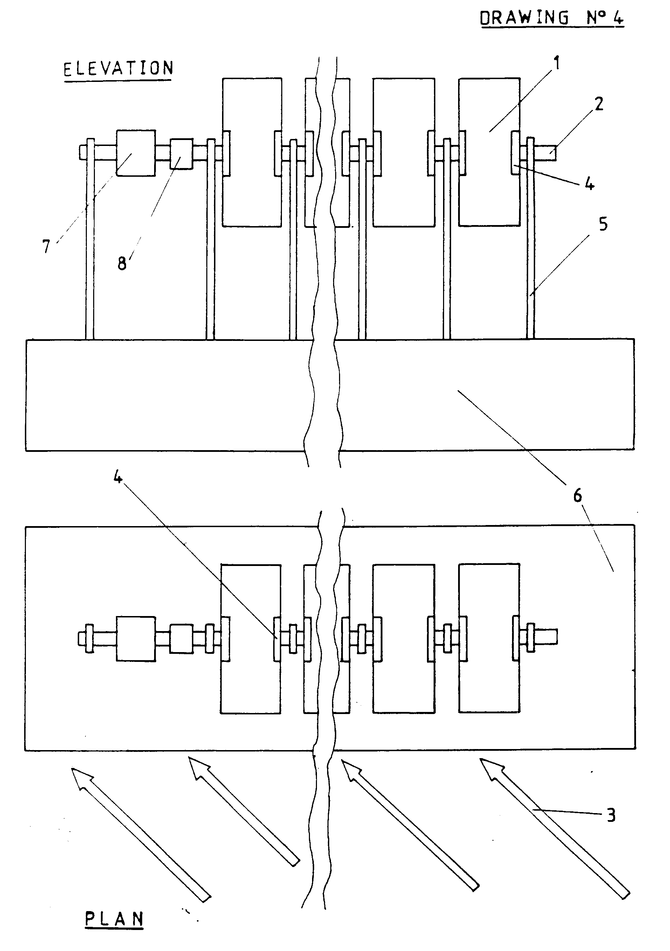

Figure 4 is a side and plan view of a machine for generating power from waves.

The machine envisaged by the invention described here below is based on the concept of the swinging blade turbine or wheel.

Very briefly this is a rotor carried by a shaft, and having at its extremities "spokes" (or arms). Each two opposite "spokes" carry between them, a vane rotatably fixed at the ends of the spokes so that it can swing to and fro according to its position relative to the flow of the medium in which the turbine is placed. Suitable stop means are provided (by means of a bar or rod) between the two "spokes" to prevent the vane, while swinging, from going beyond a certain predetermined position.

In waves there is no movement of translation of the water as such. Only the form of the wave moves. However, there is a local up and down movement which is visible involving a rotational movement of the particles of water which can be analysed into an upward, forward, downward, and backward movement. The proposed machine will utilise these local movements. In order to do so, the swinging vanes of the machine are each supplied with a counterweight fixed at the end of an arm which itself is fixed to the vane (at its rotating shaft end) and at right angles to the plane of the vane. The purpose of the counterweights and of fixing them in this manner is to ensure that the vanes will always assume the positions (indicated in the figures shown in the attached drawings) which will enable them to receive the power of the waves engaging the machine, and that they will never come to a neutral position where the machine can not move at all. Two stop means (shown as thick dots on the drawings) which can be effected by fixing a rod or bar between the end frames carrying each vane, ensure that the vane can swing only within 90°.

For operation, the machine has to be placed and fixed at a position so that its shaft (which is horizontal) has, as far as possible, to be at a mean height between the crests and the troughs of the waves. The diameter of the turbine may be substantially equal to the wave height.

This is best done by supporting the machine on vertical legs (5 in drawing No. 4), these vertical legs being supported by a float (6 in drawing No. 4) submerged below the surface to avoid rocking by the waves. To prevent the whole structure drifting with any current, suitable stays have to be provided. Allowance has to be made for the structure to move up and down with the tides so that the machine will always keep its position (height) relative to the waves. One way of doing this is to have two floats one on top of the other. The lower float is stayed so that it can neither move laterally nor vertically. (This is all, of course, needed when the water is too deep for constructing a tower on the bed of the sea). The upper float is governed by a system of vertical poles and sleeves (attached to the two floats) which allow it to move up and down with the tides but not laterally. (This latter arrangement is not shown on the drawings). The inertia of the complete structure (i.e. float, legs, machine, etc.) is expected to be very large compared to the force applied to any vane (or vanes) at any moment of time, so that the structure will not move up and down under the effect of that force, and the machine will rotate instead.

The machine, as described above, will rotate under the influence of the waves as long as it is held horizontally in the position explained above, and will give its best performance when its shaft is right across the direction of flow of the waves, with the waves coming from the left hand side when the machine is designed to rotate in the clockwise direction (as is the machine under consideration).

The working of the machine will best be explained in connection with the diagrammatic drawings attached.

The figures shown in drawings 1 & 2 are divided into two scenarios I and II, according to whether the counterweight, and the arm carrying it, of any vane is lagging behind (scenario I) or leading (scenario II) the spoke of the frame carrying the vane (rotation clockwise).

The behaviour of the various vanes (depicted a, b, c, d, e and f) when the waves engage the turbine, will now be considered for the various scenarios under various conditions of movement of the water in any wave.

For scenario I, (Drawing No. 1) this behaviour will be as follows:-
- State (1):: Indicates the positions assumed by all the vanes when the machine is outside the influence of the waves (i.e. when there are no waves, or when one wave has left the machine while the next wave has not yet engaged it - that is, the machine is above the trough of the wave and is virtually clear of the water).
- State (2):: Indicates the positions assumed by the vanes when the machine is under the influence of the upward motion of the water. All vanes to the left of the vertical line passing through the axis of the machine, will be pushed up against their respective stop means and will thus cause the machine to rotate. Those to the right of the vertical line will be pushed up against the direction of rotation and will be trailing.
They will thus be virtually inactive, (except vane (b) which, due to the stop means, will continue to be active) except for the minor influence of the rotational movement of the water, which is a positive influence on these vanes.
- State (3):: Indicates the positions of the vanes when the water moves downwards. All vanes except (c) will be flung downwards. Vanes (b), (d), (e) will be operative. But the latter two i.e. (d) and (e) can be assumed to cancel the effects of each other since they tend to drive the machine in opposing directions, thus leaving only vane (b) to be effective. Alternatively or additionally, if there is significant rotation during a downwards wave, when the vane (b) moves to position (c) and then (d) it will remain in the position shown for vane (b) and vanes (cc), (d) and (e) will assist in the positive driving.
(Note: The translational states (e.g. when the R.H. side of the machine is undergoing pressure from below, while the L.H. side is undergoing pressure from above) have not been sketched separately, but the behaviour during it can easily be deduced from the scenarios already sketched and explained).

When the wave has completely passed the turbine, all vanes will again assume the positions previously indicated in State (1).

For scenario II (Drawing No. 2) the behaviour of the vanes and the positions assumed by them are clearly indicated by the diagrams of scenario II. In the upward movement of the water, vanes (a), (b) and (e) are operative while vanes (c), (d), and (f) are idle. In the downward movement, vanes (b), (c), (d) and (f) are operative, whilst (a) and (e) are idle.

It is to be noted at this juncture that some of the vanes when passing through a certain position or positions during operation will, as clearly indicated by the drawings, be subjected to the force of the water in such a way that the joint between the vane and the arm carrying its counterweight will be stressed, thus calling for stiffening of the joint.

From the above it is seen that scenario I is more effective during the upward "stroke", while scenario II is more effective during the downward "stroke". This difference is utilised to advantage in a proposed development leading to a machine combining the two scenarios, which is shown in the figure called scenario I & II (Drawing No. 3). This combination reduces the imbalance of the proposed machine.

However, the machine hitherto developed, even in its combined form, suffers from a periodicity depending upon the frequency at which the waves engage the machine. This frequency depends upon the velocity and the wave length of the wave (i.e. the crest-crest distance).

To obtain a machine where power from the waves is received at a higher frequency than with the above described machine (though that power may be less each time it is received), the following arrangement is proposed (see Drawing No. 4):
A number of turbines (1 in the drawing) of the type described above (i.e. the "combined" machine) are stringed one after the other on a common shaft 2 in the drawing). The new machine is then placed in position with the common shaft (which is horizontal) at an angle (say 45°) to the direction of flow of the waves 3 in the drawing) instead of being right across that direction. In this manner, when a wave approaches the machine, the first turbine will receive the approaching wave first, and will start rotating. As the wave proceeds, the next turbine receives the same wave, but at a slightly different section of the wave front. This is repeated with regard to all the turbines stringed on the shaft until the wave is completely past the machine. By this time, the next wave (depending on the wave velocity, wave length, and number of turbines stringed on the shaft) would engage the first turbine. In this manner a more uniform (or less intermittent) performance is obtained.

The idea behind placing the machine with its shaft (or axis) at an angle, and not along the direction of flow of the waves, is to avoid the dampening effect of the first turbine on the wave. In other words to ensure that the second turbine receives an undampened front of the wave, and similarly with the other turbines.

Also if the machine is placed completely across the direction of flow of the waves, all the turbines will at the same time receive the wave, will get a powerful push, but will have to wait for the next wave i.e. more intermittance.

Finally, since the turbines stringed on the same shaft will, according to the above arrangement, be receiving power from the wave in turn (i.e. one after the other), the particular turbine receiving the power at any moment will have the duty of overcoming the inertia of all the other turbines and of rotating them at a time when they are completely idle. To overcome this difficulty all the turbines will be fitted with one-way free-wheel drive means (4 in the drawing) allowing each turbine, in its own turn, to engage the common shaft and to rotate it. The other turbines will, in the mean time, remain stationary. The machine will drive a generator (7 in Drawing No. 4) coupled to it through a suitable gear transmission (8 in the drawing).

## Claims

1. A fluid turbine comprising a rotary device having a plurality of vanes (a,b,c,d,e,f) angularly spaced from each other around the axis of rotation of the device, the vanes being movably mounted on the device between two positions about an axis extending at an angle to the vertical with at least one of the vanes, when suspended from the device in the absence of fluid flow, being arranged to extend at an angle to the vertical, the axis of rotation being arranged, in use, such that the parts of the device spaced from the axis that move around the axis are arranged to pass over and beneath the axis characterised in that the turbine is arranged to receive fluid flow alternately in an upwards and a downwards direction with a side of at least one vane being arranged to be engaged by fluid flowing downwardly to cause rotation in a first direction and a side of at least one vane being arranged to be engaged by fluid flowing upwardly to cause rotation in the first direction.

2. A fluid turbine as claimed in Claim 1 in which at least one side of one vane is arranged to be engaged by fluid flowing downwardly to cause rotation in the first direction with the other side of said one vane being arranged to be engaged by fluid flowing upwardly to cause rotation in the first direction during a rotational cycle.

3. A fluid turbine as claimed in Claim 1 or 2 in which the vane is part of a vane portion which includes a counterweight.

4. A fluid turbine as claimed in any preceding claim in which at least one vane is movable relative to the device between two limit positions.

5. A fluid turbine as claimed in any preceding claim including at least one second vane which, when suspended from the device in the absence of fluid flow is arranged to extend at an angle to the vertical in a direction opposed to that of a first vane which is also arranged to extend at an angle to the vertical, when suspended, in the absence of fluid flow, with the first and second vanes being located on a substantially common radial extent.

6. A wave operated arrangement including a plurality of fluid turbines as claimed in any preceding claim in which the rotary devices of the turbine are located along a common shaft, the arrangement being arranged to be located with the axis of the shaft extending at an angle to approaching waves and at an angle to the perpendicular to the approaching waves.

7. A method of operating a fluid turbine including a rotary device having a plurality of vanes angularly spaced from each other around the axis of rotation of the device, the vanes being movably mounted on the device between two positions about an axis extending at an angle to the vertical with at least one of the vanes, when suspended from the device, being caused to extend at an angle to the vertical in the absence of fluid flow is characterised in that the turbine receives fluid alternately flowing upwardly and downwardly with downwards flow engaging a side of at least one vane to cause movement in a first direction and upwards flow engaging a side of at least one vane to cause rotation in the first direction.

8. A method as claimed in Claim 7 in which downwards flow engages at least one side of at least one vane and upwards flow engages the other side of that vane during a rotational cycle to cause rotation in the first direction.

9. A method as claimed in Claim 7 or 8 in which, in the absence of fluid flow, a second vane, when suspended from the device, is caused to extend at an angle to the vertical in a direction opposed to that of a first vane which is also caused to extend at an angle to the vertical, when suspended, with the first and second vanes being located on a substantially common radial extent.

10. A method of operating a wave power arrangement as claimed in any of Claims 7 to 9 in which a plurality of rotary devices of a plurality of fluid turbines are located along a common shaft, the wave power causing rotation of the drive shaft by the rotating devices with the axis of rotation of the drive shaft being located at an angle to the approaching waves and at an angle to the perpendicular to the approaching waves.

## Patentansprüche

1. Fluidturbine, die eine Drehvorrichtung mit einer Vielzahl von Schaufeln (a,b,c,d,e,f) umfaßt, die um die Drehachse der Vorrichtung herum winklig voneinander beabstandet sind, wobei die Schaufeln zwischen zwei Stellungen um eine Achse herum beweglich an der Vorrichtung angebracht sind, die in einem Winkel zur Vertikalen verläuft, wobei sich wenigstens einer der Schaufeln, wenn sie beim Nichtvorhandensein von Fluidströmung von der Vorrichtung herabhängt, in einem Winkel zur Vertikalen erstreckt, wobei die Drehachse in Funktion so angeordnet ist, daß die von der Achse beabstandeten Teile der Vorrichtung, die sich um die Achse herum bewegen, ober- und unterhalb der Achse durchlaufen, **dadurch gekennzeichnet**, daß die Turbine Fluidstrom abwechselnd in einer Aufwärts- und einer Abwärtsrichtung aufnimmt, wobei eine Seite wenigstens einer Schaufel mit nach unten strömendem Fluid in Kontakt kommt und Drehung in einer ersten Richtung bewirkt, und eine Seite wenigstens einer Schaufel mit nach oben strömendem Fluid in Kontakt kommt und Drehung in der ersten Richtung bewirkt.

2. Fluidturbine nach Anspruch 1, wobei wenigstens eine Seite einer Schaufel mit nach unten strömendem Fluid in Kontakt kommt und Drehung in der ersten Richtung bewirkt, wobei die andere Seite der einen Schaufel mit nach oben strömendem Fluid in Kontakt kommt und während eines Drehzyklus Drehung in der ersten Richtung bewirkt.

3. Fluidturbine nach Anspruch 1 oder 2, wobei die Schaufel Teil eines Schaufelabschnitts ist, der ein Ausgleichgewicht enthält.

4. Fluidturbine nach einem der vorangehenden Ansprüche, wobei wenigstens eine Schaufel in bezug auf die Vorrichtung zwischen zwei Endstellungen beweglich ist.

5. Fluidturbine nach einem der vorangehenden Ansprüche, die wenigstens eine zweite Schaufel enthält, die sich, wenn sie beim Nichtvorhandensein von Fluidströmung von der Vorrichtung herabhängt, in einem Winkel zur Vertikalen in einer Richtung erstreckt, die der einer ersten Schaufel entgegengesetzt ist, die sich ebenfalls, wenn sie beim Nichtvorhandensein von Fluidströmung herabhängt, in einem Winkel zur Vertikalen erstreckt, wobei die erste und die zweite Schaufel in einem im wesentlichen gemeinsamen radialen Bereich angeordnet sind.

6. Wellenbetriebene Anordnung einschließlich einer Vielzahl von Fluidturbinen nach einem der vorangehenden Ansprüche, wobei die Drehvorrichtungen der Turbine entlang einer gemeinsamen Welle angeordnet sind, wobei die Anordnung so angebracht ist, daß sich die Achse der Welle in einem Winkel zu sich annähernden Wellen und in einem Winkel senkrecht zu den sich annähernden Wellen erstreckt.

7. Verfahren zum Betreiben einer Fluidturbine einschließlich einer Drehvorrichtung mit einer Vielzahl von Schaufeln, die um die Drehachse der Vorrichtung herum winklig voneinander beabstandet sind, wobei die Schaufeln zwischen zwei Stellungen um eine Achse herum beweglich an der Vorrichtung angebracht sind, die in einem Winkel zur Vertikalen verläuft, wobei sich wenigstens eine der Schaufeln, wenn sie von der Vorrichtung herabhängt, beim Nichtvorhandensein von Fluidströmung in einem Winkel zur Vertikalen erstreckt, das **dadurch gekennzeichnet** ist, daß die Turbine Fluid aufnimmt, das abwechselnd nach oben und nach unten strömt, wobei nach unten gerichtete Strömung mit einer Seite wenigstens einer Schaufel in Kontakt kommt und Bewegung in einer ersten Richtung bewirkt, und nach oben gerichtete Strömung mit einer Seite wenigstens einer Schaufel in Kontakt kommt und Drehung in der ersten Richtung bewirkt.

8. Verfahren nach Anspruch 7, wobei nach unten gerichtete Strömung mit wenigstens einer Seite wenigstens einer Schaufel in Kontakt kommt und nach oben gerichtete Strömung während eines Drehzyklus mit der anderen Seite dieser Schaufel in Kontakt kommt und Drehung in der ersten Richtung bewirkt.

9. Verfahren nach Anspruch 7 oder 8, wobei sich beim Nichtvorhandensein von Fluidströmung eine zweite Schaufel, wenn sie von der Vorrichtung herabhängt, in einem Winkel zur Vertikalen in einer Richtung erstreckt, die der einer ersten Schaufel entgegengesetzt ist, die sich ebenfalls in einem Winkel zur Vertikalen erstreckt, wenn sie herabhängt, wobei die erste und die zweite Schaufel in einem im wesentlichen gemeinsamen radialen Bereich angeordnet sind.

10. Verfahren zum Betreiben einer Wellenenergieanordnung nach einem der Ansprüche 7 bis 9, wobei eine Vielzahl von Drehvorrichtungen einer Vielzahl von Fluidturbinen entlang einer gemeinsamen Welle angeordnet ist, wobei die Wellenenergie Drehung der Antriebswelle durch die Drehvorrichtungen bewirkt, wobei sich die Drehachse der Antriebswelle in einem Winkel zu den sich annähernden Wellen und in einem Winkel senkrecht zu den sich annähernden Wellen befindet.

## Revendications

1. Turbine à fluide (1) comprenant un dispositif rotatif ayant une pluralité d'aubes (a, b, c, d, e, f) angulairement espacées entre elles autour de l'axe de rotation du dispositif, les aubes étant montées mobiles sur le dispositif entre deux positions par rapport à un axe qui s'étend en formant un angle par rapport à la verticale, au moins l'une des aubes étant prévue, lorsqu'elle pend du dispositif en l'absence de fluide, pour s'étendre selon un angle par rapport à la verticale, l'axe de rotation étant disposé, en service, de telle manière que les parties du dispositif espacées de l'axe, qui se déplacent autour de l'axe, puissent passer au-dessus et au-dessous de l'axe, caractérisée en ce que la turbine est destinée à recevoir un écoulement de fluide en alternance dans un sens montant et dans un sens descendant, un côté d'au moins une aube étant prévu pour se trouver en contact avec le fluide qui s'écoule vers le bas pour entraîner la rotation dans un premier sens, et un côté d'au moins une aube étant prévu pour se trouver en contact avec le fluide qui s'écoule vers le haut pour entraîner la rotation dans le premier sens.

2. Turbine à fluide selon la revendication 1, dans laquelle au moins un côté d'une aube est prévu pour se trouver en contact avec le fluide qui s'écoule vers le bas pour entraîner la rotation dans le premier sens, tandis que l'autre côté de ladite aube est prévu pour se trouver en contact avec le fluide qui s'écoule vers le haut pour entraîner la rotation dans le premier sens pendant un cycle de rotation.

3. Turbine à fluide selon la revendication 1 ou 2, dans laquelle l'aube fait partie d'une partie aube comprenant un contre-poids.

4. Turbine à fluide selon l'une des revendications précédentes, dans laquelle au moins une aube est mobile par rapport au dispositif entre deux positions limites.

5. Turbine à fluide selon l'une des revendications précédentes, comprenant au moins une deuxième aube qui, lorsqu'elle pend du dispositif en l'absence d'écoulement de fluide, est prévue pour s'étendre selon un angle par rapport à la verticale dans un sens opposé à celui d'une première aube, qui est également prévue pour s'étendre selon un angle par rapport à la verticale, lorsqu'elle pend en l'absence d'un écoulement de fluide, les première et deuxième aubes étant situées sur une étendue radiale sensiblement commune.

6. Agencement actionné par des vagues, comprenant une pluralité de turbines à fluide selon l'une des revendications précédentes, dans lequel les dispositifs rotatifs de la turbine sont placés le long d'un arbre commun, l'agencement étant prévu pour être placé de telle manière que l'axe de l'arbre s'étende selon un angle par rapport aux vagues arrivantes et selon un angle par rapport à la perpendiculaire aux vagues arrivantes.

7. Procédé pour la commande d'une turbine à fluide comprenant un dispositif rotatif ayant une pluralité d'aubes angulairement espacées entre elles autour de l'axe de rotation du dispositif, les aubes étant montées mobiles sur le dispositif entre deux positions par rapport à un axe qui s'étend en formant un angle par rapport à la verticale, au moins l'une des aubes, lorsqu'elle pend du dispositif, étant amenée à s'étendre selon un angle par rapport à la verticale en l'absence d'écoulement de fluide, caractérisé en ce que la turbine reçoit un fluide qui s'écoule en alternance vers le haut et vers le bas, l'écoulement descendant venant en contact avec un côté d'au moins une aube pour provoquer un mouvement dans un premier sens et l'écoulement montant venant en contact avec un côté d'au moins une aube pour provoquer une rotation dans le premier sens.

8. Procédé selon la revendication 7, dans lequel l'écoulement descendant vient en contact avec au moins un côté d'au moins une aube et l'écoulement montant vient en contact avec l'autre côté de cette aube pendant le cycle de rotation, pour provoquer la rotation dans le premier sens.

9. Procédé selon la revendication 7 ou 8, dans lequel, en l'absence d'écoulement de fluide, une deuxième aube, lorsqu'elle pend du dispositif, est amenée à s'étendre selon un angle par rapport à la verticale dans un sens opposé à celui d'une première aube, qui est également amenée à s'étendre selon un angle par rapport à la verticale, lorsqu'elle pend, les première et deuxième aubes étant situées sur une étendue radiale sensiblement commune.

10. Procédé de commande d'un agencement utilisant l'énergie des vagues, selon l'une des revendications 7 à 9, dans lequel une pluralité de dispositifs rotatifs d'une pluralité de turbines à fluide sont placés le long d'un arbre commun, l'énergie des vagues provoquant la rotation de l'arbre de commande par les dispositifs rotatifs, l'axe de rotation de l'arbre de commande étant situé selon un angle par rapport aux vagues arrivantes et selon un angle par rapport à la perpendiculaire aux vagues arrivantes.
